# EUROPÄISCHE PATENTSCHRIFT

(11) **EP 3 592 499 B1**
(45) Veröffentlichungstag und Bekanntmachung des Hinweises auf die Patenterteilung: **30.06.2021**
(21) Anmeldenummer: 18708982.6
(22) Anmeldetag: 02.03.2018
(51) Int. Cl.: B23K 26/20, B23K 26/36, B23K 26/064, B23K 26/352, G03H 1/32, G02B 27/48

(54) **VERFAHREN UND VORRICHTUNG ZUR FORMUNG KOHÄRENTER STRAHLUNG**
METHOD AND DEVICE FOR SHAPING COHERENT RADIATION
PROCÉDÉ ET DISPOSITIF DE FORMATION D'UN RAYONNEMENT COHÉRENT

(30) Priorität: 07.03.2017 DE 102017203669
(43) Veröffentlichungstag der Anmeldung: 15.01.2020
(73) Patentinhaber: Robert Bosch GmbH, 70442 Stuttgart (DE)
(72) Erfinder: MIKHAYLOV, Dmitriy, 71272 Renningen (DE); SHAKIROV, Damir, 75203 Koenigsbach-Stein (DE)
(86) Internationale Anmeldenummer: PCT/EP2018/055208
(87) Internationale Veröffentlichungsnummer: WO 2018/162357

(56) Entgegenhaltungen:
- WO-A1-2005/050286
- US-A- 3 633 999
- US-B2- 6 717 104

## Beschreibung

### Stand der Technik

Die Erfindung betrifft ein Verfahren zur Strahlformung bei einem Laserbearbeitungsprozess oder bei einer Laserprojektion, bei dem in einer Laseranordnung ein Laserstrahl auf eine Bearbeitungs- / Abbildungsebene fokussiert und der Laserstrahl mittels mindestens eines Strahlformers hinsichtlich seiner Intensitätsverteilung angepasst werden kann.

Die Erfindung betrifft weiterhin eine Laseranordnung mit einer Rechnereinheit zur Durchführung des erfindungsgemäßen Verfahrens.

Die Intensitäts- bzw. Fluenzverteilung eines Laserstrahls in der Bearbeitungsebene bzw. in der Abbildungsebene spielt eine große Rolle für die Ergebnisse eines Laserbearbeitungsprozesses oder der Qualität einer Projektion und bildet somit einen wichtigen Parameter in der Lasermaterialbearbeitung als auch in der Laserprojektion. Allerdings ist die Strahlform nicht einfach zu variieren, weswegen Laserstrahlen mit gaußförmigem Strahlprofil am häufigsten verwendet werden. Zur Strahlformung können feste Optiken, die diffraktive optische Elemente (DOE) genannt werden, im Strahlengang verbaut werden, die einen typischen gaußförmigen Strahl in unterschiedliche aber nicht veränderbare Strahlformen modifizieren. Solche DOEs haben den Vorteil, dass die Intensitätsverteilung des Laserstrahls in gewissen Grenzen nach Belieben eingestellt werden kann. Für unterschiedliche Strahlformen werden unterschiedliche DOEs benötigt.

Unter flexiblen bzw. programmierbaren Strahlformern, z.B. so genannte Spatial Light Modulatoren (SLM), Digital Micromirror Device (DMD) usw., versteht man Strahlformungselemente welche bei der Kenntnis der Eigenschaften des Eingangsstrahls, sowohl die örtliche als auch die zeitliche Intensitätsverteilung eines Lichtstrahls (z.B. Laser) variieren können. Dabei existieren mehrere Algorithmen für die Programmierung dieser Strahlformer in Abhängigkeit der gewünschten Intensitätsverteilung. Ein von diffraktiven optischen Elementen (DOE) bekannter Ansatz für die Formung der Lichtstrahlung mittels Phasenverschiebung ist der sog. diffraktive Diffuser, basierend auf dem Iterativen Fourier-Transformations-Algorithmus (IFTA). Hierbei wird mit dem IFTA zu einer vorgegebenen Intensitätsverteilung und einer vorgegeben reellen Eingangsstrahlamplitude (üblicherweise einer ebenen Welle) ein Phasenprofil errechnet, so dass die Fourier-Transformation der komplexen Amplitude eine der Anwendung angemessene Approximation der gewünschten Fernfeld-Verteilung ergibt. Ein großer Nachteil des diffraktiven Diffusers bei Verwendung der kohärenten Strahlung ist die Entstehung von Specklemustern in der Abbildungsebene. Diese Specklemuster sind durch die Interferenz des kohärenten Lichts (Laserstrahl) bedingt. Die einzelnen Beugungsordnungen, aus denen das gewünschte Intensitätsprofil im Fernfeld entstehen soll, liegen bei dem Diffuserprinzip so nah beieinander, dass diese miteinander interferieren. Aufgrund von wechselnder konstruktiver und destruktiver Interferenz kommt es daher zu einem Kontrastverhältnis von bis zu 100%.

Die US 6,717,104 B2 bildet den Oberbegriff der Ansprüche 1 und 10 und beschreibt beispielsweise ein System zur Materialbearbeitung mittels Laserstrahlung bestehend aus einer Laserquelle, die einen Laserstrahl erzeugt, der zu einem Werkstück geleitet wird, einem Spatial Light Modulator SLM, der einzeln ansteuerbare Elemente zur Beeinflussung des Phasenprofils des Laserstrahls aufweist, um auf dem Werkstück eine zugehörige Intensitätsverteilung zu erzeugen, eine mit dem SLM verbundene Steuereinheit, um deren einzeln ansteuerbare Elemente anzusteuern, so dass das Phasenprofil des Laserstrahls derart eingestellt werden kann, dass ein gewünschtes Intensitätsprofil auf dem Werkstück erzielt wird, das für die beabsichtigte Materialbearbeitung geeignet ist. Weiterhin sind vor dem SLM und auf das Werkstück Sensoren gerichtet, die die Intensitätsverteilung erfassen und Daten an die Steuereinheit senden, auf deren Basis Abweichungen in der Phasenverteilung korrigiert werden.

Die EP 1 068 923 B1 zeigt ein Verfahren und eine Vorrichtung zur Erzeugung einer Intensitätsverteilung über einen Arbeitslaserstrahl. Dazu wird ein Laserstrahl (Quellenstrahl) mittels eines als Leistungseinstelleinrichtung verwendeten, akusto-optischen Modulators in einen ersten und einen zweiten Teilstrahl aufgeteilt. In den Strahlengang des zweiten Teilstrahls ist ein zweiter akusto-optischer Modulator als weitere Leistungseinstelleinrichtung eingekoppelt. Die Strahlprofile der beiden Teilstrahle werden unterschiedlich geformt. Dabei weist ein Teilstrahl einen breiten und der andere Teilstrahl einen schmalen Strahldurchmesser auf. Anschließend werden die beiden Teil-strahlen zu einem Materialbearbeitungsstrahl zusammengeführt und auf ein zu bearbeitendes Objekt geleitet. Durch entsprechende Einstellung der Leistungseinstelleinrichtungen in den Strahlengängen der Teilstrahlen kann die Intensitätsverteilung des Materialbearbeitungsstrahls schnell verändert und eingestellt werden.

Die DE 10 2012 207 220 A1 offenbart ein Verfahren zur Bearbeitung eines Werkstücks mit Laserstrahlung. In den Strahlengang des Lasers ist eine Strahlformungseinrichtung eingebracht. Diese ermöglicht es, auf einer Bearbeitungsfläche eines Werkstücks das Strahlprofil des Lasers einzustellen. Damit können beispielsweise bei einer Laserablation unterschiedliche Geometrien von dem Werkstück abgetragen werden. Als Strahlformungseinrichtung ist ein über eine Steuerung ansteuerbarer Spatial Light Modulator (SLM) vorgesehen. Zusätzlich kann eine Matrix in dem Strahlengang vorgesehen sein, welche pixelweise für die Laserstrahlung durchlässig oder nicht durchlässig geschaltet werden kann. Dadurch können entsprechende Muster in dem Strahlprofil des Lasers erzeugt werden.

Auch die DE 10 2005 017 014 A1 beschreibt ein Verfahren zur Formgebung eines Beleuchtungslaserstrahls, wobei ein Ausgangslaserstrahl eines Lasers mittels eines strahlformenden Elements in einen Beleuchtungslaserstrahl mit gewünschten Eigenschaften geformt wird. Dabei kann beispielsweise das Strahlprofil oder der Querschnitt verändert werden. Zumindest eine Eigenschaft eines ausgekoppelten Anteils (Überwachungslaserstrahl) des Ausgangslaserstrahls, der nicht in Richtung des Beleuchtungslaserstrahls verläuft, wird von einer Detektionseinrichtung ermittelt. Vorzugsweise wird die Leistung des Überwachungslaserstrahls erfasst und daraufhin die Leistung des Lasers geregelt. Es ist jedoch auch möglich, die Strahlform des Ausgangslaserstrahls zu überwachen. Bei Kenntnis der zumindest einen Eigenschaft des Ausgangslaserstrahls kann bei Kenntnis der Wirkung des strahlformenden Elements die dem strahlformenden Element nachfolgende Einrichtung gesteuert und damit der Beleuchtungsstrahlengang verändert werden.

Die DE 199 31 989 A1 beschreibt ebenfalls ein Verfahren und eine Vorrichtung zur Formung des Intensitätsprofils eines Laserstrahls. Dazu wird ein optisch adressierbarer, ortsauflösender Lichtmodulator (optical adressable spatial light modulator, OASLM) in den Strahlengang des Lasers eingebracht. Die Transmissions- bzw. Reflexionseigenschaften des OASLM sind von der lokalen Beleuchtungsintensität abhängig, wobei die Transmission bei steigender Beleuchtungsintensität abnimmt.

Die o.g. Beispiele zeigen, dass Laserstrahlung mit geformten Intensitätsprofilen insbesondere in der Materialbearbeitung eingesetzt wird. Allerdings können sich die erzeugten Specklemuster im Strahlprofil negativ auf die Bearbeitungsqualität, z.B. beim Laserschweißen, Abtragen, Löten usw., auswirken. In noch nicht veröffentlichten Parallel-Anmeldungen der Anmelderin sind unterschiedliche Ansätze beschrieben, wie die Strahlqualität verbessert werden kann. So werden u.a. in diesen Anmeldungen auch Ansätze beschrieben, wie die eingangs beschriebenen störenden Specklemuster insbesondere bei gepulsten Lasern unterdrückt werden können.

Aufgabe dieser Erfindung ist es, ein Verfahren bereit zu stellen, bei dem nicht die Vermeidung der Speckels im Vordergrund steht, sondern durch Kompensation die Auswirkung der Speckles bei der diffusorbasierten Strahlformung und damit Ungenauigkeiten in Strahlformung zu minimieren, um die Bearbeitungsqualität bzw. Abbildungsqualität mit beliebiger kohärenter und geformter Strahlung zu steigern.

Es ist weiterhin Aufgabe der Erfindung, eine entsprechende Laseranordnung mit einer Rechnereinheit zur Durchführung des Verfahrens bereitzustellen.

### Offenbarung der Erfindung

Die das Verfahren betreffende Aufgabe wird durch die Merkmale der Ansprüche 1 bis 5 gelöst.

Erfindungsgemäß ist dabei vorgesehen, dass der Laserstrahl mittels eines Strahlteilers in mindestens einen weiteren zweiten Teilstrahl aufgeteilt und in einem ersten Teilstrahl Abweichungen des Strahlprofils von einem Sollstrahlprofil bestimmt und aus einer Differenz zum Sollstrahlprofil für den mindestens zweiten Teilstrahl ein Kompensationsstrahlprofil berechnet und mittels eines mindestens zweiten Strahlformers der zweite Teilstrahl moduliert wird, und anschließend der erste Teilstrahl und der mindestens zweite Teilstrahl mittels einer Strahlzusammenführung überlagert und auf die Bearbeitungs-/ Abbildungsebene fokussiert werden. Damit lassen sich die Einflüsse der Specklebildung bei der diffusorbasierten Strahlformung kompensieren. Der Kern dieser Erfindung besteht nicht in der Unterdrückung oder Vermeidung von Specklemustern bei Strahlformung kohärenter Strahlung mit diffusorbasierten Algorithmen, sondern in der Kompensation ihrer Auswirkung auf Prozesse oder Abbildungsqualität. Die Specklebildung wird explizit zugelassen. Zur Kompensation wird mindestens ein weiterer Strahlengang benötigt, mithilfe dessen Specklefehler des ersten Strahlengangs kompensiert werden. Somit setzt sich das endgültige Intensitätsprofil des Laserstrahls aus zwei (oder mehreren) geformten Strahlprofilen zusammen, die sich zu dem Wunschprofil ergänzen bzw. kompensieren. Die Vorteile der Erfindung bestehen darin, dass das System sehr energieeffizient funktioniert. Die einfachste Variante kann aus lediglich zwei programmierbaren Strahlformern aufgebaut werden. Außerdem kann die Laserleistung auf zwei oder mehrere Strahlformer aufgeteilt werden, was die maximal einsetzbare Laserleistung erhöht, was vor allem bei Materialbearbeitung wichtig ist. Die Bearbeitungsqualität bzw. Abbildungsqualität mit beliebiger kohärenter und geformter Strahlung wird damit gesteigert.

Um das auftretende Specklemuster, d.h. die Intensitätsverteilung in der Bearbeitungs-/ Abbildungsebene genau vermessen zu können, erfolgt in bevorzugter Verfahrensvariante eine Strahlprofilvermessung im ersten Teilstrahl mittels einer Strahlprofilkameras oder mittels anderer geeigneter Detektoren zur Erfassung von Intensitätsverläufen. Durch Vergleich der gemessenen Strahlprofile mit gespeicherten Sollstrahlprofilen kann eine Regelung für die Strahlformung realisiert und damit eine ideale Kompensation der Auswirkung der Speckles erreicht werden.

Zudem kann in einer weiteren Verfahrensvariante vorgesehen sein, dass eine Strahlprofilvermessung zusätzlich im zweiten Teilstrahl mittels einer weiteren Strahlprofilkamera durchgeführt wird, was vorteilhaft hinsichtlich einer Überprüfung und ggf. Nachregelung ist.

In bevorzugter Verfahrensvariante werden zur Strahlformung flexible Strahlformer verwendet.

Diese sind in bevorzugter Verfahrensvariante als Spatial Light Modulatoren (SLM) und/ oder als Digital-Mirrow-Devices (DMD-Einheiten) ausgeführt sind. Eine Strahlformung mittels einer Phasenmodulation kann vorteilhaft mittels einer LCoS-SLM-Einheit (Liquid Crystal on Silicon) erfolgen, bei der mittels eines Arrays von doppelbrechenden Flüssigkristallen die Phase des einfallenden Laserstrahls diskretisiert werden kann, indem jedes Pixel eine unterschiedlich ansteuerbare Winkelausrichtung der Flüssigkristalle aufweist. Hiermit kann eine hochauflösende, schnelle und flexible Änderung der Phase im Rohstrahl ermöglicht und die Änderung der Laserintensitätsverteilung in einer Bearbeitungsebene oder Projektionsebene nach einer Fouriertransformation mittels eines Linsensystems angepasst werden. Eine Strahlformung mit Hilfe einer Amplitudenmodulation kann mittels einer DMD-Einheit (Digital Micromirror Device) im Strahlformungsmodul erfolgen. Dabei diskretisiert ein Array von einzeln ansteuerbaren Mikrospiegeln den einfallenden Laserstrahl durch die Aufteilung in viele kleine Teilstrahlen, womit durch die unterschiedliche Ablenkung der Einzelstrahlen die Intensitätsverteilung des Laserstrahls in der Bearbeitungsebene angepasst werden kann. Hierbei wird das einfallende Licht teilweise wieder direkt zurück reflektiert, was bei einer horizontalen Spiegelstellung erfolgt, oder teilweise durch Kippung der Mikrospiegel aus dem Strahlenbündel ausgeschnitten.

Um die Genauigkeit der Strahlformung insbesondere zur Erzeugung des Kompensationsstrahlprofils zu erhöhen, ist in einer Verfahrensvariante vorgesehen, dass als zweiter Strahlformer zur Modulation des zweiten Teilstrahls ein Spatial Light Modulator verwendet wird, der gegenüber dem ersten Strahlformer für den ersten Teilstrahl eine genauere Modulation erlaubt bzw. eine höhere Pixelauflösung aufweist oder nach einem anderen Strahlformungsprinzip (Phasenmodulation oder Amplitudenmodulation) funktioniert. Eine Alternative ist, im Kompensationsstrahlengang anstatt eines Phasenmodulators einen Amplitudenmodulator zu verwenden. Somit werden in zwei Strahlengängen unterschiedliche physikalische Prinzipien zur Strahlformung verwendet, was zum Ausgleich der formungsprinzipbasierten Fehler führt.

Für das erfindungsgemäße Verfahren kann sowohl eine gepulste oder nicht gepulste kohärente Lichtquelle (Laser) verwendet werden, wobei gepulste kohärente Lichtquellen eher mit höheren Laserleistungen z.B. für die Materialbearbeitung, verbunden sind. Nicht gepulste Laser, welche eher eine niedrigere Laserleistung aufweisen, dienen hauptsächlich der Bilderzeugung.

Eine bevorzugte Verwendung des Verfahrens, wie es zuvor mit seinen Varianten beschrieben wurde, sieht den Einsatz in Laserbearbeitungsanlagen zum Laserabtragen, sowie Laserbohren, Lasermarkieren, Laserreinigen, Laserlöten bzw. Laserschweißen und zum Laserpolieren vor. Hierbei kommt es auf eine möglichst gute Strahlqualität an. Insbesondere die eingangs beschriebene störende Specklebildung bei der Strahlformung, welche zu Ungenauigkeiten führen kann, kann mit dem vorgestellten Verfahren kompensiert werden.

Eine weitere bevorzugte Verwendung des zuvor beschriebenen Verfahrens sieht den Einsatz in Laserprojektionsanlagen zur Bildgebung oder zur Erzeugung von Hologrammen vor. So lässt sich damit beispielsweise die Bildqualität bei Anwendungen in Fahrzeugen (z.B. Car Multimedia, Head-up-Displays) aber auch bei Laserprojektionen auf Großflächen (z.B. im Cinema-Bereich) verbessern.

Die die Vorrichtung betreffende Aufgabe wird dadurch gelöst, dass die Laseranordnung zur Durchführung des Verfahrens, wie es zuvor beschrieben wurde, eingerichtet ist, und der Laserstrahl mittels eines Strahlteilers in mindestens einen ersten und einen zweiten Teilstrahl aufteilbar ist und die Rechnereinheit eingerichtet ist, für den ersten Teilstrahl Abweichungen des Strahlprofils von einem Sollstrahlprofil zu bestimmen und aus einer Differenz zum Sollstrahlprofil für den mindestens zweiten Teilstrahl ein Kompensationsstrahlprofil zu berechnen und im mindestens zweiten Teilstrahl ein weiterer Strahlformer zur Erzeugung eines Kompensationsstrahlprofils angeordnet ist und sich die Teilstrahlen mittels einer Strahlzusammenführung zu einem Ausgangsstrahlprofil überlagern lassen. Prinzipiell lässt sich eine derartige Laseranordnung mit der beschriebenen Rechnereinheit zur Bestimmung des Kompensationsstrahlprofils als Modul in bestehende Laserbearbeitungsanlagen oder Laser-Projektoren integrieren, so dass auch nachträglich durch diese Art der Kompensation die Specklebildung minimiert werden kann.

Die Erfindung wird im Folgenden anhand eines in den Figuren dargestellten Ausführungsbeispiels näher erläutert. Es zeigt:
Figur 1 in einer schematischen Darstellung ein Diagramm zur Überlagerung von Einzelstrahlprofilen zu einem Sollprofil mittels eines diffraktiven Diffusers und
Figur 2 in einer weiteren schematischen Darstellung eine Laseranordnung zum Bearbeiten von Werkstücken oder zur Laserprojektion.

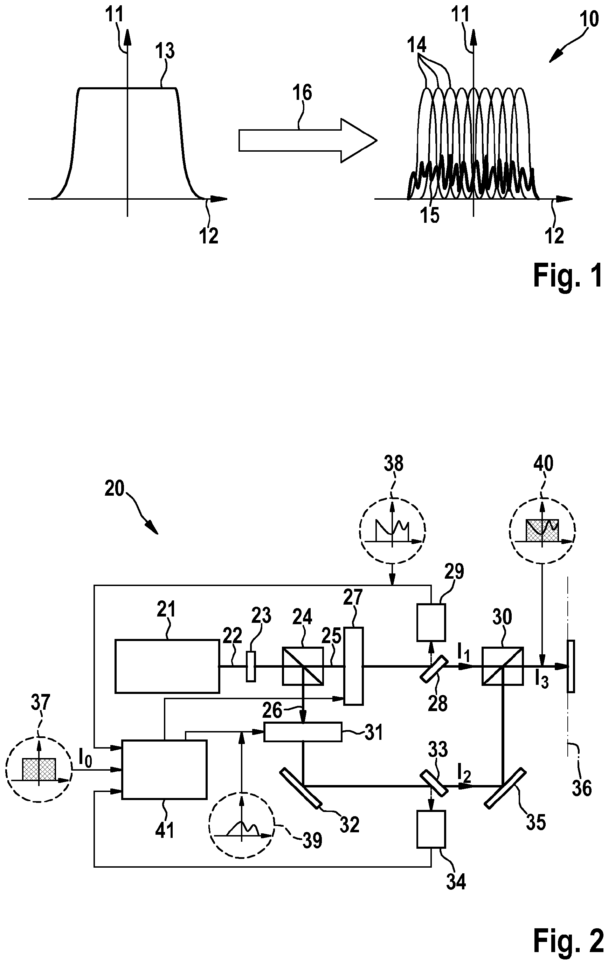

Figur 1 zeigt schematisch in einem Diagramm 10 den eingangs beschriebenen Nachteil bei Verwendung eines diffraktiven Diffusor-Algorithmus 16. Die Intensitätsverteilung eines Sollprofils 13, schematisch dargestellt als Verlauf einer Intensität 11 in Abhängigkeit eines Abstands 12, wird mittels des Diffusors 16 durch Überlagerung mehrerer Einzelstrahlprofile 14 zusammengesetzt. Liegen diese Einzelstrahlen zu nahe beieinander, interferieren diese und es bilden sich so genannte Speckels 15. Diese Specklemuster stören aufgrund der wechselnden konstruktiven und destruktiven Interferenz die Abbildung des Sollprofils 13.

Figur 2 zeigt in einer weiteren schematischen Darstellung eine Laseranordnung 20 gemäß der Erfindung zum Bearbeiten von Werkstücken oder zur Laserprojektion.

Ausgehend von einer Laserquelle 21 wird am Laserstrahl 22 zunächst mittels eines Polarisators eine Polarisationseinstellung 23 vorgenommen und danach der Laserstrahl 22 mittels eines Strahlteilers 24 in zwei Strahlengänge, einen p-polarisierten und einen s-polarisierten Teilstrahl 25, 26 aufgeteilt. Dies kann z.B. mithilfe eines Polarisationsstrahlteilers gemacht werden. Die Laserleistung in jedem Strahlengang soll einstellbar sein, z.B. durch die Polarisationseinstellung 23 der Ausgangsstrahlung. Beim s-polarisierten Teilstrahl 26 handelt es sich um eine Strahlkomponente, die linear senkrecht (Index: s) zur Einfallsebene polarisiert ist. Sie wird in der Literatur auch als transversalelektrische (TE) Komponente bezeichnet. Im anderen Fall, dem p-polarisierten Strahl 25 wird die Amplitude einer in der Einfallsebene linear parallel (Index: p) polarisierten Welle betrachtet. Sie wird in der Literatur auch als transversalmagnetische (TM) Komponente bezeichnet.

Der erste Teilstrahl, hier der p-polarisierte Teilstrahl 25, wird in einem ersten Strahlformer 27 derart geformt, dass in einer Bearbeitungs-/ Abbildungsebene 36 ein vorgebbares Sollstrahlprofil 37 (l₀) resultieren soll. Aufgrund von Systemfehlern und Speckles 15 (siehe Figur 1) wird sich ein abweichendes Strahlprofil mit der Intensität l₁ ergeben. Dieses Strahlprofil wird z.B. mithilfe von einer ersten Strahlprofilkamera 29 vermessen und an eine zentrale Rechnereinheit 41 übergeben. Dazu wird mit einem Auskoppelelement 28 ein Teilstrahl zur ersten Strahlprofilkamera 29 gelenkt.

In der Rechnereinheit 41 wird die Differenz zwischen dem Sollstrahlprofil 37 (l₀) und dem gemessenen Strahlprofil 38 (l₁) gebildet, die als Soll-Intensitätsprofil bzw. Kompensationsstrahlprofil 39 (l₂) für den zweiten Strahlengang vorgegeben wird. Mittels eines zweiten Strahlformers 31 wird dann der zweite Teilstrahl, hier der s-polarisierte Teilstrahl 26, derart geformt, dass die Differenz zwischen l₀ und l₁ ausgeglichen bzw. kompensiert werden kann. Das Intensitätsprofil in diesem zweiten Strahlengang kann z.B. mit einer zweiten Strahlprofilkamera 34 überprüft und mittels der Rechnereinheit 41 ggf. auch nachgeregelt werden. Zur Strahlführung dienen u.a. diverse Umlenkspiegel 32, 35 sowie andere optische Systeme, wobei ein weiteres Auskoppelelement 33 einen Teilstrahl der zweiten Strahlprofilkamera 34 zuführt. Weitere optische Elemente, wie Spiegel und/ oder Linsensysteme, welche zur Strahlführung benötigt werden, sind zur Wahrung der Übersichtlichkeit nicht in Figur 2 dargestellt.

Werden dann in einer Strahlzusammenführung 30 das gemessene Strahlprofil 38 (l₁) des p-polarisierten Teilstrahls 25 und das Kompensationsstrahlprofil 39 (l₂) überlagert, ergibt sich ein Ausgangsstrahlprofil 40 (l₃), das an das Sollstrahlprofil 37 (l₀) angenähert ist. So können Fehler bei der Strahlformung und auch die störenden Specklemuster kompensiert werden.

Die Strahlformung kann beispielsweise mittels sogenannter Liquid Crystal on Silicon Spatial Light Modulatoren (LCoS-SLM) geschehen. Hierbei kann durch ein Array von doppelbrechenden Flüssigkeitskristallen die Phase des einfallenden Laserstrahls durch unterschiedliche Anstellung jedes einzelnen Pixels diskretisiert werden. Eine andere Möglichkeit der Strahlformung kann mittels eines Digital Micromirror Device (DMD) erreicht werden, wobei ein Array von Mikrospiegeln den einfallenden Laserstrahl durch die Aufteilung in viele kleine Teil-Strahlen diskretisiert, womit der Laserstrahl durch eine Ablenkung der Einzelstrahlen in der Bearbeitungsebene geformt werden kann. Ein derart geformter Laserstrahl kann ohne weiteres Prozessieren zur Laserbearbeitung genutzt werden.

Anzumerken ist dabei, dass die Genauigkeit der Strahlformung im zweiten, kompensierenden Strahlengang genauer sein soll, als im ersten. Dies kann z.B. dadurch erreicht werden, dass gegenüber dem ersten Strahlformer 27 ein Spatial Light Modulator (SLM) mit höherer Pixel-Auflösung als zweiter Strahlformer 31 eingesetzt wird.

Die Erfindung funktioniert sowohl mit gepulster als auch mit nicht-gepulster kohärenter Strahlung.

Das vorgestellte Verfahren kann in Laserbearbeitungsanlagen eingesetzt werden, die mit Strahlformern 27, 31 ausgestattet sind. Die Anwendungsgebiete für das zuvor beschriebene Konzept zur Vermeidung bzw. Kompensation von Specklemustern sind vielfältig. Prinzipiell kann diese Methode bei allen bekannten Laserbearbeitungsprozessen, insbesondere bei der Mikrobearbeitung, eingesetzt werden: Laserschweißen, Laserpolieren, Laserabtragen, Markieren, Bohren, Lasersäubern usw.

Ein weiteres Anwendungsgebiet des vorgestellten Verfahrens und der zuvor beschriebenen Laseranordnung 20 stellt den Einsatz bei der Laserprojektion für die Bildgebung bzw. Holographie dar.

## Patentansprüche

1. Verfahren zur Strahlformung bei einem Laserbearbeitungsprozess oder bei einer Laserprojektion, bei dem in einer Laseranordnung (20) ein Laserstrahl (22) auf eine Bearbeitungs- / Abbildungsebene (36) fokussiert und der Laserstrahl (22) mittels mindestens eines Strahlformers (27) hinsichtlich seiner Intensitätsverteilung angepasst werden kann, **dadurch gekennzeichnet, dass** der Laserstrahl (22) mittels eines Strahlteilers (24) in mindestens einen weiteren zweiten Teilstrahl aufgeteilt und in einem ersten Teilstrahl Abweichungen des Strahlprofils von einem Sollstrahlprofil (37) bestimmt und aus einer Differenz zum Sollstrahlprofil (37) für den mindestens zweiten Teilstrahl ein Kompensationsstrahlprofil (39) berechnet und mittels eines mindestens zweiten Strahlformers (31) der zweite Teilstrahl moduliert wird, und anschließend der erste Teilstrahl und der mindestens zweite Teilstrahl mittels einer Strahlzusammenführung (30) überlagert und auf die Bearbeitungs-/ Abbildungsebene (36) fokussiert werden.

2. Verfahren nach Anspruch 1, **dadurch gekennzeichnet, dass** eine Strahlprofilvermessung im ersten Teilstrahl mittels Strahlprofilkameras (29) durchgeführt wird.

3. Verfahren nach Anspruch 1 oder 2, **dadurch gekennzeichnet, dass** eine Strahlprofilvermessung zusätzlich im zweiten Teilstrahl mittels einer weiteren Strahlprofilkamera (34) durchgeführt wird.

4. Verfahren nach einem der Ansprüche Anspruch 1 bis 3, **dadurch gekennzeichnet, dass** zur Strahlformung flexible Strahlformer (27, 31) verwendet werden.

5. Verfahren nach Anspruch 4, **dadurch gekennzeichnet**, das als flexible Strahlformer (27, 31) Spatial Light Modulatoren und/ oder Digital-Mirrow-Device-Einheiten verwendet werden.

6. Verfahren nach einem der Ansprüche 1 bis 5, **dadurch gekennzeichnet, dass** als zweiter Strahlformer (31) zur Modulation des zweiten Teilstrahls ein Spatial Light Modulator verwendet wird, der gegenüber dem ersten Strahlformer (27) für den ersten Teilstrahl eine genauere Modulation erlaubt bzw. eine höhere Pixelauflösung aufweist oder nach einem anderen Strahlformungsprinzip funktioniert.

7. Verfahren nach einem der Ansprüche 1 bis 6, **dadurch gekennzeichnet, dass** eine gepulste oder nicht gepulste kohärente Lichtquelle verwendet wird.

8. Verwendung des Verfahrens nach einem der Ansprüche 1 bis 7 in Laserbearbeitungsanlagen zum Laserabtragen, Laserbohren, Lasermarkieren, Laserlöten bzw. Laserschweißen, Laserreinigen oder zum Laserpolieren.

9. Verwendung des Verfahrens nach einem der Ansprüche 1 bis 7 in Laserprojektionsanlagen zur Bildgebung oder zur Erzeugung von Hologrammen.

10. Laseranordnung (20), welche mindestens eine Rechnereinheit (41), eine Laserquelle (21), einen Strahlformer (27) umfasst, wobei ein Laserstrahl (22) aus der Laserquelle (21) auf eine Bearbeitungs- / Abbildungsebene (36) fokussierbar und der Laserstrahl (22) mittels des Strahlformers (27) hinsichtlich seiner Intensitätsverteilung anpassbar ist, **dadurch gekennzeichnet, dass** die Laseranordnung (20) zur Durchführung des Verfahrens nach den Ansprüchen 1 bis 5 eingerichtet ist, und der Laserstrahl (22) mittels eines Strahlteilers (24) in mindestens einen ersten und einen zweiten Teilstrahl aufteilbar ist
und die Rechnereinheit eingerichtet ist, für den ersten Teilstrahl Abweichungen des Strahlprofils von einem Sollstrahlprofil (37) zu bestimmen und aus einer Differenz zum Sollstrahlprofil (37) für den mindestens zweiten Teilstrahl ein Kompensationsstrahlprofil (39) zu berechnen
und im mindestens zweiten Teilstrahl ein weiterer Strahlformer (31) zur Erzeugung des berechneten Kompensationsstrahlprofils (39) angeordnet ist und sich die Teilstrahlen mittels einer Strahlzusammenführung (30) zu einem Ausgangsstrahlprofil (40) überlagern lassen.

## Claims

1. Method for beam shaping in a laser processing process or in a laser projection, in which, in a laser installation (20), a laser beam (22) is focused onto a processing/imaging plane (36) and the laser beam (22) can be adapted in terms of its intensity distribution by means of at least one beam shaper (27), **characterized in that** the laser beam (22) is divided into at least one further second partial beam by means of a beam splitter (24), and deviations of the beam profile from a targeted beam profile (37) are determined in a first partial beam and a compensation beam profile (39) is calculated for the at least second partial beam from a difference to the target beam profile (37) and the second partial beam is modulated by means of at least one second beam shaper (31), and subsequently the first partial beam and the at least second partial beam are superposed by means of a beam combination (30) and are focused onto the processing/imaging plane (36).

2. Method according to Claim 1, **characterized in that** a beam profile measurement is performed in the first partial beam by means of beam profile cameras (29).

3. Method according to Claim 1 or 2, **characterized in that** a beam profile measurement is additionally performed in the second partial beam by means of a further beam profile camera (34).

4. Method according to one of Claims 1 to 3, **characterized in that** flexible beam shapers (27, 31) are used for beam shaping.

5. Method according to Claim 4, **characterized in that** spatial light modulators and/or digital mirror device units are used as the flexible beam shapers (27, 31).

6. Method according to one of Claims 1 to 5, **characterized in that** a spatial light modulator, which permits a more accurate modulation or has a higher pixel resolution for the first partial beam compared to the first beam shaper (27), or operates according to a different beam shaping principle, is used as the second beam shaper (31) for modulating the second partial beam.

7. Method according to one of Claims 1 to 6, **characterized in that** a pulsed or a non-pulsed coherent light source is used.

8. Use of the method according to one of Claims 1 to 7 in laser processing installations for laser ablation, laser drilling, laser marking, laser soldering or laser welding, laser cleaning or for laser polishing.

9. Use of the method according to one of Claims 1 to 7 in laser projection facilities for image generation or the generation of holograms.

10. Laser installation (20), comprising at least a computation unit (41), a laser source (21), a beam shaper (27), wherein a laser beam (22) from the laser source (21) is focusable onto a processing/imaging plane (36) and the laser beam (22) is adaptable in terms of its intensity distribution by means of the beam shaper (27), **characterized in that** the laser installation (20) is configured for performing the method according to Claims 1 to 5, and the laser beam (22) is able to be divided into at least a first and a second partial beam by means of a beam splitter (24), and the computation unit is configured to determine for the first partial beam deviations of the beam profile from a target beam profile (37) and to calculate from a difference to the target beam profile (37) a compensation beam profile (39) for the at least second partial beam and a further beam shaper (31) for generating the calculated compensation beam profile (39) is arranged in the at least second partial beam and the partial beams can be superposed to form an output profile (40) by means of a beam combination (30).

## Revendications

1. Procédé de formation de faisceau dans un processus d'usinage au laser ou dans une projection laser, dans lequel, dans un agencement à laser (20), un faisceau laser (22) peut être focalisé sur un plan d'usinage/d'imagerie (36), et le faisceau laser (22) peut être adapté en termes de distribution d'intensité au moyen d'au moins un dispositif de formation de faisceau (27),
**caractérisé en ce que** le faisceau laser (22) est divisé au moyen d'un séparateur de faisceau (24) en au moins un deuxième faisceau partiel supplémentaire, et dans un premier faisceau partiel, des écarts du profil de faisceau par rapport à un profil de faisceau de consigne (37) sont déterminés, et à partir d'une différence par rapport au profil de faisceau de consigne (37), un profil de faisceau de compensation (39) est calculé pour ledit au moins un deuxième faisceau partiel, et le deuxième faisceau partiel est modulé au moyen d'au moins un deuxième dispositif de formation de faisceau (31), et ensuite, le premier faisceau partiel et ledit au moins un deuxième faisceau partiel sont superposés au moyen d'une fusion de faisceaux (30) et sont focalisés sur le plan d'usinage/d'imagerie (36).

2. Procédé selon la revendication 1, **caractérisé en ce qu'**une mesure de profil de faisceau est effectuée dans le premier faisceau partiel au moyen de caméras de profil de faisceau (29).

3. Procédé selon la revendication 1 ou 2, **caractérisé en ce qu'**une mesure de profil de faisceau est effectuée en plus dans le deuxième faisceau partiel au moyen d'une caméra de profil de faisceau supplémentaire (34).

4. Procédé selon l'une quelconque des revendications 1 à 3, **caractérisé en ce que** des dispositifs de formation de faisceau flexibles (27, 31) sont utilisés pour la formation de faisceau.

5. Procédé selon la revendication 4, **caractérisé en ce que** des modulateurs spatiaux de lumière et/ou des unités à dispositif numérique de miroir sont utilisés comme dispositifs de formation de faisceau flexibles (27, 31) .

6. Procédé selon l'une quelconque des revendications 1 à 5, **caractérisé en ce que** comme deuxième dispositif de formation de faisceau (31) pour la modulation du deuxième faisceau partiel, un modulateur spatial de lumière est utilisé qui, par rapport au premier dispositif de formation de faisceau (27), permet une modulation plus précise pour le premier faisceau partiel, ou présente une résolution de pixels plus élevée, ou fonctionne selon un autre principe de formation de faisceau.

7. Procédé selon l'une quelconque des revendications 1 à 6, **caractérisé en ce qu'**une source de lumière cohérente puisée ou non pulsée est utilisée.

8. Utilisation du procédé selon l'une quelconque des revendications 1 à 7 dans des installations d'usinage au laser pour l'enlèvement au laser, le perçage au laser, le marquage au laser, le brasage au laser ou le soudage au laser, le nettoyage au laser ou le polissage au laser.

9. Utilisation du procédé selon l'une quelconque des revendications 1 à 7 dans des installations de projection laser pour l'imagerie ou pour la génération d'hologrammes.

10. Agencement à laser (20), comprenant au moins une unité de calcul (41), une source laser (21), un dispositif de formation de faisceau (27), dans lequel un faisceau laser (22) provenant de la source laser (21) peut être focalisé sur un plan d'usinage/ d'imagerie (36), et le faisceau laser (22) peut être adapté en termes de distribution d'intensité au moyen du dispositif de formation de faisceau (27),
**caractérisé en ce que** l'agencement à laser (20) est aménagé pour effectuer le procédé selon les revendications 1 à 5, et le faisceau laser (22) peut être divisé en au moins un premier et un deuxième faisceau partiel au moyen d'un séparateur de faisceau (24), et l'unité de calcul est aménagée pour déterminer pour le premier faisceau partiel des écarts du profil de faisceau par rapport à un profil de faisceau de consigne (37), et pour calculer à partir d'une différence par rapport au profil de faisceau de consigne (37) un profil de faisceau de compensation (39) pour ledit au moins un deuxième faisceau partiel, et un dispositif de formation de faisceau (31) supplémentaire est disposé dans ledit au moins un deuxième faisceau partiel pour générer le profil de faisceau de compensation (39) calculé, et les faisceaux partiels peuvent être superposés au moyen d'une fusion de faisceaux (30) pour former un profil de faisceau de sortie (40).
